# EUROPEAN PATENT APPLICATION

(11) **EP 4 628 840 A1**
(43) Date of publication of application: **08.10.2025**
(21) Application number: 24738697.2
(22) Date of filing: 03.01.2024
(51) Int. Cl.: G01B 11/14, G06T 7/00, G06T 7/174, G06T 7/60, G06V 10/10, G06Q 50/04, H01M 10/04

(54) **MONITORING DEVICE AND METHOD FOR OPERATING SAME**

(30) Priority: 03.01.2023 KR 20230000930
(71) Applicant: LG Energy Solution, Ltd., Seoul 07335 (KR)
(72) Inventor: LEE, Ji Hoo, Daejeon 34122 (KR); LEE, Jong Han, Daejeon 34122 (KR); HONG, Seung Gyun, Daejeon 34122 (KR); LEE, Seung Jun, Daejeon 34122 (KR)
(74) Representative: BCKIP Part mbB
(86) International application number: PCT/KR2024/000097
(87) International publication number: WO 2024/147627

(57) **Abstract**

A monitoring device according to one embodiment disclosed herein includes an image acquisition unit configured to acquire a plurality of jelly roll images for specified turns of the jelly roll while the jelly roll is formed while a positive electrode, a negative electrode, and a separator included in a battery cell are wound, an image analysis unit configured to set reference positions that are moved by a specified distance in a specified direction as the number of turns increases in each of the plurality of jelly roll images and acquire specified meandering gaps at the reference positions, and a state determination unit configured to determine whether the jelly roll is defective based on the meandering gaps.

## Description

### [TECHNICAL FIELD]

### CROSS-REFERENCE TO RELATED APPLICATION

This application claims priority to and the benefit of Korean Patent Application No. 10-2023-0000930 filed in the Korean Intellectual Property Office on January 3, 2023, the entire contents of which are incorporated herein by reference.

### TECHNICAL FIELD

Embodiments disclosed herein relate to a monitoring device and a method of operating the same.

### [BACKGROUND ART]

Recently, research and development on secondary batteries has been actively conducted. Here, the secondary battery is a battery capable of charging and discharging and includes all recent lithium ion batteries such as conventional Ni/Cd batteries and Ni/MH batteries. Among secondary batteries, lithium-ion batteries have an advantage of having a much higher energy density than conventional Ni/Cd batteries, Ni/MH batteries, and the like. In addition, the lithium-ion batteries may be manufactured in a compact and lightweight form, and thus are used as a power source for a mobile device. In addition, the lithium-ion batteries are attracting attention as a next-generation energy storage medium as a range of use expands to a power source for an electric vehicle.

The secondary batteries may generally be used as a battery pack including a battery module in which a plurality of battery cells are connected in series and/or parallel. In addition, the secondary batteries may be used as a battery rack including a plurality of battery modules and a rack frame accommodating the battery modules.

Here, the battery cell may be manufactured by accommodating an electrode assembly in a battery case and injecting an electrolyte solution into the battery case. The battery cell is classified into cylindrical, prismatic, and pouch types according to the type of the battery case, and the cylindrical battery cell may include an electrode assembly, a battery case of a cylindrical metal can that accommodates the electrode assembly and an electrolyte solution, and a cap assembly assembled above the cylindrical can.

In the manufacture of the cylindrical battery cell, control of meandering is an important factor. However, the positional accuracy of the electrode and separator can be reduced, thereby causing meandering during winding and causing safety accidents such as ignition.

### [DISCLOSURE]

### [TECHNICAL PROBLEM]

A camera module may be used to measure a meandering gap. However, when the meandering gap is measured at a specified position of an image, it may be difficult to measure the appropriate meandering gap due to an increase in diameter according to the winding of a jelly roll. Therefore, when the diameter of the jelly roll increases, it may be necessary to adjust a measuring position of the meandering gap to measure the meandering gap at the contact between a positive electrode and a negative electrode when the diameter of the jelly roll increases.

The objects of embodiments disclosed herein are not limited to the above-described objects, and other objects that are not mentioned will be able to be clearly understood by those skilled in the art from the following descriptions.

### [TECHNICAL SOLUTION]

A monitoring device according to one embodiment disclosed herein includes an image acquisition unit configured to acquire a plurality of jelly roll images for specified turns of the jelly roll while the jelly roll is formed while a positive electrode, a negative electrode, and a separator included in a battery cell are wound, an image analysis unit configured to set reference positions that are moved by a specified distance in a specified direction as the number of turns increases in each of the plurality of jelly roll images and acquire specified meandering gaps at the reference positions, and a state determination unit configured to determine whether the jelly roll is defective based on the meandering gaps.

A method of operating a monitoring device disclosed herein includes an operation of acquiring a plurality of jelly roll images for specified turns of the jelly roll while the jelly roll is formed while a positive electrode, a negative electrode, and a separator included in a battery cell are wound, an operation of setting reference positions that are moved by a specified distance in a specified direction as the number of turns increases in each of the plurality of jelly roll images, an operation of acquiring specified meandering gaps at the reference positions, and an operation of determining whether the jelly roll is defective based on the meandering gaps.

### [ADVANTAGEOUS EFFECTS]

According to the monitoring device and the method of operating the same according to various embodiments disclosed herein, it is possible to adjust the measuring position of the meandering gap to measure the meandering gap at the contact between the positive electrode and the negative electrode when the diameter of the jelly roll increases. Therefore, according to the monitoring device and the method of operating the same according to various embodiments disclosed herein, it is possible to measure the appropriate meandering gap even when the diameter increases according to the winding of the jelly roll.

The effects of the monitoring device and the method of operating the same according to the disclosure of the present document are not limited to the above-described effects, and other effects that are not mentioned will be able to be clearly understood by those skilled in the art according to the disclosure of the present document.

### [DESCRIPTION OF DRAWINGS]

FIG. 1 is a block diagram of a monitoring device according to one embodiment of the present disclosure.
FIG. 2 illustrates a process of forming a jelly roll of the monitoring device according to one embodiment of the present disclosure.
FIG. 3 illustrates a jelly roll image according to one embodiment of the present disclosure.
FIG. 4 illustrates a reference position changed by an increase in the number of turns according to one embodiment of the present disclosure.
FIG. 5 illustrates a starting stage, middle stage, and ending stage of the jelly roll image according to one embodiment of the present disclosure.
FIG. 6 illustrates a method of operating the monitoring device according to one embodiment of the present disclosure.

In the description of the drawings, the same or similar reference numerals may be used for the same or similar components.

### [MODE FOR INVENTION]

Hereinafter, embodiments of the present invention will be described with reference to the accompanying drawings. However, it should be understood that this is not intended to limit the present invention to specific embodiments and includes various modifications, equivalents, and/or alternatives of the embodiments of the present invention.

It should be understood that the embodiments of the present document and the terms used herein are not intended to limit the technical features described herein to specific embodiments and include various modifications, equivalents, or substitutes of the corresponding embodiments. In the description of the drawings, similar reference numerals may be used for similar or related components. The singular form of a noun corresponding to an item may include one item or a plurality of items unless the relevant context clearly dictates otherwise.

In the present document, each of phrases such as "A or B," "at least one of A and B," "at least one of A or B," "A, B, or C," "at least one of A, B, and C," and "at least one of A, B, or C" may include any one of the items listed together in the corresponding phrase among these phrases or all possible combinations thereof. Terms such as "first," "second," "first," "second," "A," "B," "(a)," or "(b)" may simply be used to distinguish the corresponding component from another and do not limit the corresponding components in another aspect (e.g., importance or order).

When a certain component (e.g., a first component) is described as being "coupled," "connected," or "joined" to another component (e.g., a second component) with or without the terms "functionally" or "communicatively" or "coupled" or "connected," this means that the certain component may be connected to another component directly (e.g., by wire or wirelessly) or indirectly (e.g., through a third component).

A method according to various embodiments disclosed herein may be provided to be included in a computer program product. The computer program product may be traded between sellers and buyers as commodities. The computer program product may be distributed in the form of a device-readable storage medium (e.g., a compact disc read only memory (CD-ROM)) or distributed (e.g., downloaded or uploaded) through application stores or directly online between two user devices. In the case of the online distribution, at least some of the computer program products may be at least temporarily stored or temporarily generated in a device-readable storage medium such as a memory of a server of a manufacturer, a server of an application store, or a relay server.

According to the embodiments disclosed herein, each component (e.g., a module or a program) of the above-described components may include a single object or a plurality of objects, and some of the plurality of objects may be separately disposed in another component. According to the embodiments disclosed herein, one or more components or operations among the above-described corresponding components may be omitted, or one or more other components or operations may be added. Alternatively or additionally, the plurality of components (e.g., modules or programs) may be integrated into one component. In this case, the integrated component may perform one or more functions of each of the plurality of components identically or similarly to those performed by the corresponding component of the plurality of components before the integration. According to the embodiments disclosed herein, operations performed by modules, programs, or other components may be executed sequentially, in parallel, repeatedly, or heuristically, or one or more of the operations may be executed in a different order or omitted, or one or more other operations may be added.

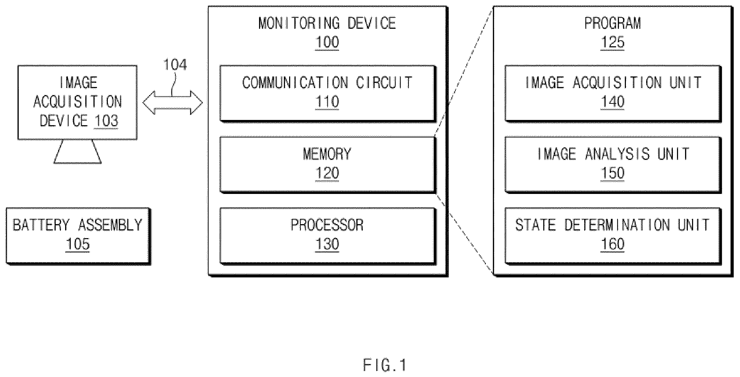

FIG. 1 is a block diagram of a monitoring device 100 according to one embodiment of the present disclosure.

In one embodiment, the monitoring device 100 may determine a state of a battery assembly 105 based on an image of the battery assembly 105 acquired by an image acquisition device 103. Here, the image acquisition device 103 may include a plurality of camera modules. Here, the battery assembly 105 may be a jelly roll in which a positive electrode, a separator, a negative electrode, and a separator are wound.

In one embodiment, the monitoring device 100 may determine the state of the battery assembly 105 based on dimensional inspection results and/or exterior inspection results for the battery assembly 105. In one embodiment, the dimensional inspection may include inspection for a meandering gap of the battery assembly 105. In one embodiment, the exterior inspection may include checking for core mismatch or cutting burr. Here, the core mismatch may indicate a case in which the positive electrode deviates from the negative electrode (e.g., leftward deviation, rightward deviation, upward deviation, or downward deviation).

In one embodiment, the monitoring device 100 may determine that the state of the battery assembly 105 is good when the dimensional inspection results and/or exterior inspection results for the battery assembly 105 are all normal. In one embodiment, the monitoring device 100 may determine that the state of the battery assembly 105 is defective when at least one of the dimensional inspection results and the exterior inspection results for the battery assembly 105 indicates a defect.

Hereinafter, components of the monitoring device 100 will be described schematically, and then a specific method of operating the monitoring device 100 will be described.

Referring to FIG. 1, the monitoring device 100 may include a communication circuit 110, a memory 120, and a processor 130. According to the embodiment, the monitoring device 100 illustrated in FIG. 1 may further include at least one component (e.g., a display, an input device, or an output device) other than the components illustrated in FIG. 1.

In one embodiment, the communication circuit 110 may establish a wired communication channel and/or wireless communication channel between the monitoring device 100 and the image acquisition device 103 and transmit and receive data with the image acquisition device 103 via the established communication channel 104.

In one embodiment, the memory 120 may include a volatile memory and/or a non-volatile memory.

In one embodiment, the memory 120 may store data used by at least one component (e.g., the processor 130) of the monitoring device 100. For example, the data may include a program 125 (or instruction related thereto), input data, or output data. In one embodiment, the instruction may allow the monitoring device 100 to perform operations defined by the instruction when executed by the processor 130.

In one embodiment, the memory 120 may include the program 125 (e.g., the image acquisition unit 140, an image analysis unit 150, and/or a state determination unit 160).

In one embodiment, the processor 130 may include a central processing unit, an application processor, a graphics processing unit, a neural processing unit (NPU), an image signal processor, a sensor hub processor, or a communication processor.

In one embodiment, the processor 130 may control at least another component (e.g., a hardware or software component) of the monitoring device 100 connected to the processor 130 by executing the program 125 (e.g., the image acquisition unit 140, the image analysis unit 150, and/or the state determination unit 160) and perform various data processing or calculations.

The image acquisition unit 140 may acquire a plurality of jelly roll images for specified turns of the jelly roll while the jelly roll is formed while the positive electrode, the separator, the negative electrode, and the separator are wound. The image acquisition unit 140 may acquire the plurality of jelly roll images from the image acquisition device 103.

The image analysis unit 150 may acquire specified meandering gaps from each of the plurality of jelly roll images.

The state determination unit 160 may determine whether the jelly roll is defective based on the meandering gaps.

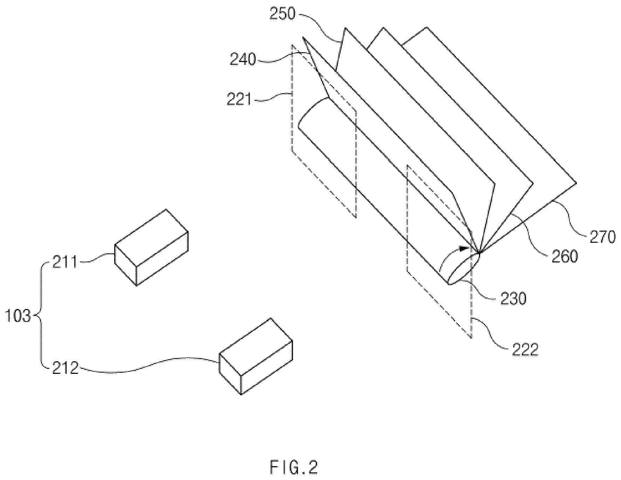

Hereinafter, a method of determining, by the monitoring device 100, the state of the battery assembly 105 through the image acquisition unit 140, the image analysis unit 150, and/or the state determination unit 160 will be described in detail with reference to FIGS. 2 to 5.

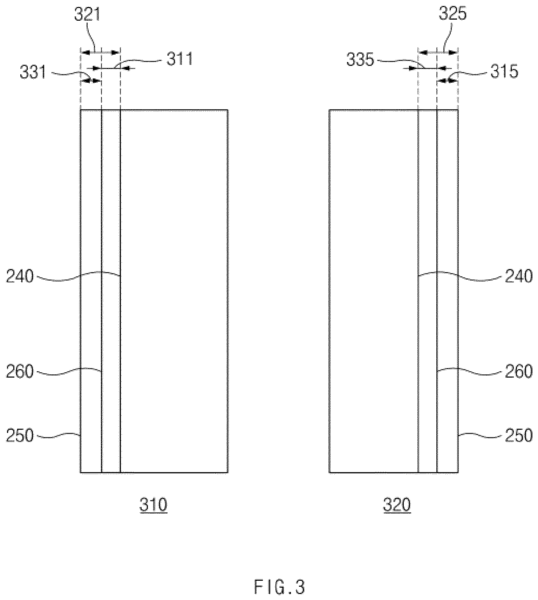

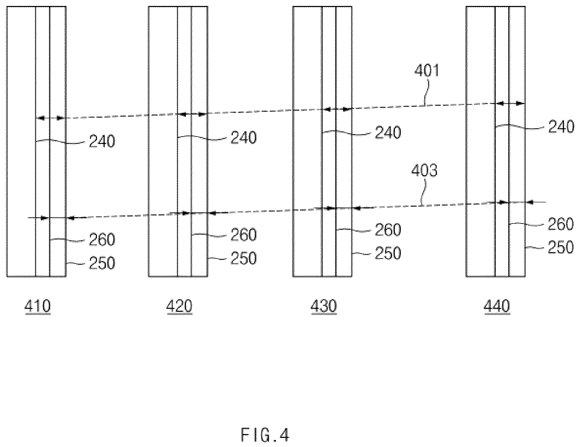

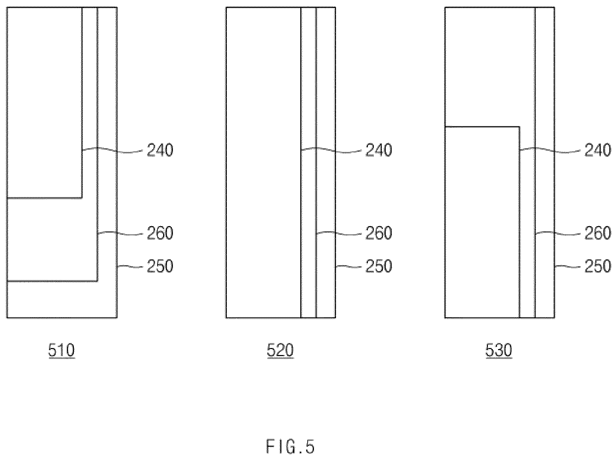

FIG. 2 is a view illustrating a process of forming a jelly roll according to one embodiment of the present disclosure. FIG. 3 illustrates the meandering of the jelly roll according to one embodiment of the present disclosure. FIG. 4 illustrates a reference position changed by an increase in the number of turns according to one embodiment of the present disclosure. FIG. 5 illustrates a beginning end, middle end, and an ending end of the jelly roll image according to one embodiment of the present disclosure.

Referring to FIG. 2, the image acquisition device 103 may include a plurality of camera modules 211 and 212.

In one embodiment, when a core 230 rotates, a positive electrode 240, a first separator 250, a negative electrode 260, and a second separator 270 may be wound.

In one embodiment, the image acquisition device 103 may capture images of specified imaging areas 221 and 222. In one embodiment, the image acquisition device 103 may consecutively capture the images of the specified imaging areas 221 and 222. In one embodiment, the image acquisition device 103 may capture the images of the specified imaging areas 221 and 222 while the jelly roll is formed as the positive electrode 240, the first separator 250, the negative electrode 260, and the second separator 270 included in the battery cell are wound. In one embodiment, the image acquisition device 103 may capture the images of the specified imaging areas 221 and 222 while the core 230 rotates specified turns (e.g., 25 turns).

In one embodiment, the images captured by the image acquisition device 103 may be moving images rather than still images. According to the embodiment, in one embodiment, the images captured by the image acquisition device 103 may be still images.

In one embodiment, the image acquisition device 103 may transmit the captured images to the monitoring device 100. In one embodiment, the image acquisition unit 150 of the monitoring device 100 may receive the images acquired by the image acquisition device 103.

Referring to FIG. 3, the image acquisition unit 150 may receive a left jelly roll image 310 acquired by a left camera module 211 capturing the first imaging area 221 and a right jelly roll image 320 acquired by a right camera module 212 capturing the second imaging area 222.

In one embodiment, the image analysis unit 150 may analyze the jelly roll images 310 and 320.

In one embodiment, the image analysis unit 150 may divide the jelly roll images 310 and 320 into jelly roll images corresponding to the specified turns (e.g., 25 turns). In one embodiment, the image analysis unit 150 may divide the jelly roll images 310 and 320 into jelly roll images for each rotation of the core 230. For example, the image analysis unit 150 may divide the jelly roll images 310 and 320 into 25 sets of jelly roll images corresponding to 25 turns. Here, the set of the jelly roll images may include the left jelly roll image and the right jelly roll image.

In one embodiment, the image analysis unit 150 may extract distance-related information and/or exterior-related information from the jelly roll images.

### Extract distance-related information

In one embodiment, the image analysis unit 150 may extract boundaries of the positive electrode 240, the first separator 250, the negative electrode 260, and the second separator 270 from the jelly roll images. In one embodiment, the image analysis unit 150 may extract the boundaries of the positive electrode 240, the first separator 250, the negative electrode 260, and the second separator 270 based on a specified boundary detection algorithm. Here, the specified boundary detection algorithm may be based on Sobel, Canny, and/or Laplacian algorithms.

In one embodiment, the image analysis unit 150 may acquire specified meandering gaps from the jelly roll images based on the extracted boundaries. Here, the specified meandering gaps may include first meandering gaps 311 and 315 between the negative electrode 260 and the positive electrode 240, second meandering gaps 321 and 325 between the negative electrode 260 and the separator 250, and third meandering gaps 331 and 335 between the positive electrode 240 and the separator 250.

In one embodiment, the image analysis unit 150 may acquire the specified meandering gaps at reference positions of the jelly roll images. In one embodiment, the reference positions may be set to be moved by a specified distance (e.g., an increase in diameter of the jelly roll) (e.g., 1 pixel or 2 pixels, or 42 or 84 micrometers) in a specified direction (e.g., a direction opposite to that of a wound area (a lower end area in FIG. 3)) as the number of turns increases in each of the plurality of jelly roll images. In one embodiment, the image analysis unit 150 may acquire the meandering gaps based on the reference positions set to be moved by the specified distance in the specified direction as the number of turns increases. Since the reference positions are set to be moved by the specified distance in the specified direction as the number of turns increases in each of the plurality of jelly roll images, it is possible to prevent the occurrence of the measurement deviation of the meandering gaps as the jelly roll is wound and the diameter of the jelly roll increases.

In embodiments, the specified distance at which the reference positions are moved may be set based on thicknesses of the positive electrode 240, the first separator 250, the negative electrode 260, and the second separator 270. For example, the image analysis unit 150 may calculate a diameter of the jelly roll increased during one turn based on the thicknesses of the first separator 250, the negative electrode 260, and the second separator 270 and calculate the specified distance at which the reference positions are moved based on the calculated increase in diameter.

In another embodiment, the reference positions may be set to be moved by the specified distance in the specified direction in a range of the specified number of turns (e.g., 18 to 25 turns). For example, the reference positions may be moved by the specified distance in the specified direction as the number of turns increases in a range of the specified number of turns (e.g., 18 to 25 turns).

For example, referring to FIG. 4, it is possible to confirm a change line 401 of the reference position for acquiring the second meandering gaps between the negative electrode 260 and the separator 250 and a change line 403 of the reference position for acquiring the third meandering gaps between the positive electrode 240 and the separator 250. Here, images 410, 420, 430, and 440 are right jelly roll images corresponding to turns k, (k+1), (k+2), and (k+3) turn within 25 turns (here, k is an integer between 1 or more and 22 or less).

### Extract exterior-related information

In one embodiment, the image analysis unit 150 may analyze the presence or absence of the core mismatch or cutting burr in the jelly roll images of the specified number of turns among the jelly roll images. Here, the jelly roll images of the specified number of turns may include a starting stage image or ending stage image. Here, the starting stage image may represent a jelly roll image of 1 turn, and the ending stage image may represent a jelly roll image of 25 turns. Referring to FIG. 5, image 510 may represent a starting stage image of the jelly roll, image 52 may represent a middle stage image of the jelly roll, and image 530 may represent an ending stage image of the jelly roll.

In one embodiment, the image analysis unit 150 may determine that the core mismatch has occurred when the positive electrode 240 deviates from the negative electrode 260 in the jelly roll images of the specified number of turns (e.g. leftward deviation, rightward deviation, upward deviation, or downward deviation).

In one embodiment, the image analysis unit 150 may determine the presence or absence of the cutting burr of the cut surface (e.g., an upper portion or lower portion) of the positive electrode 240 in the jelly roll images of the specified number of turns.

### State determination

In one embodiment, the state determination unit 160 may determine whether the jelly roll is defective based on the meandering gaps.

In one embodiment, the state determination unit 160 may determine whether the jelly roll is defective by comparing the meandering gaps acquired by the image analysis unit 150 with the reference meandering gaps preset for each of the meandering gaps. For example, in one embodiment, the state determination unit 160 may determine whether the jelly roll is defective by comparing the first meandering gaps 311 and 315 with the reference meandering gap for the first meandering gaps 311 and 315. For example, in one embodiment, the state determination unit 160 may determine whether the jelly roll is defective by comparing the second meandering gaps 321 and 325 with the reference meandering gap for the second meandering gaps 321 and 325. For example, in one embodiment, the state determination unit 160 may determine whether the jelly roll is defective by comparing the third meandering gaps 331 and 335 with the reference meandering gap for the third meandering gaps 331 and 335. Here, the reference meandering gap for the first meandering gap 311 and 315, the reference meandering gap for the second meandering gaps 321 and 325, and the reference meandering gap for the third meandering gaps 331 and 335 may have different values.

In one embodiment, when at least one of the meandering gaps exceeds the reference meandering gap, the monitoring device 100 may determine that the jelly roll is defective.

In another embodiment, the state determination unit 160 may determine whether the jelly roll is defective based on a difference value between the same type of meandering gaps (e.g. the left meandering gap and the right meandering gap). For example, the state determination unit 160 may determine whether the jelly roll is defective by comparing a difference value between the left meandering gap and the right meandering gap with a reference meandering gap for the difference value. For example, the state determination unit 160 may determine whether the jelly roll is defective by comparing a difference value between the first left meandering gap 311 and the first right meandering gap 315 of the first meandering gaps 311 and 315 with a reference meandering gap for the corresponding difference value.

In one embodiment, when the difference value exceeds the reference meandering gap, the monitoring device 100 may determine that the jelly roll is defective.

In one embodiment, the state determination unit 160 may determine whether the jelly roll is defective based on the presence or absence of the core mismatch or cutting burr. For example, when the core mismatch or cutting burr occurs, the state determination unit 160 may determine that the jelly roll is defective.

In one embodiment, when at least one of the meandering gap, core mismatch, or cutting burr indicates that the jelly roll is defective, the state determination unit 160 may determine that the jelly roll is defective.

The monitoring device 100 described with reference to FIGS. 1 to 5 may adjust the measuring position of the meandering gap to measure the meandering gap at the contact between the positive electrode and the negative electrode when the diameter of the jelly roll increases. Therefore, the monitoring device 100 according to one embodiment may measure an appropriate meandering gap even when the diameter of the jelly roll increases according to the winding of the jell roll.

In FIG. 1, although the monitoring device 100 and the image acquisition device 103 are illustrated as separate devices, this is only illustrative. According to the embodiment, the monitoring device 100 and the image acquisition device 103 may be implemented as the same one device.

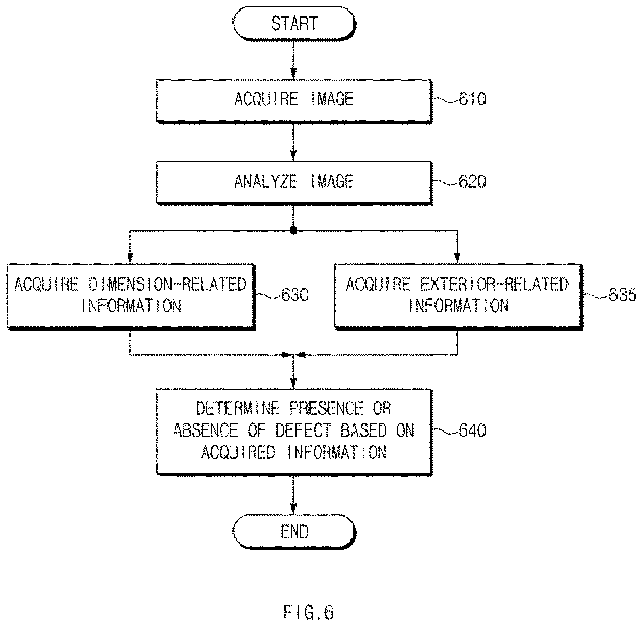

FIG. 6 illustrates a method of operating the monitoring device 100 according to one embodiment of the present disclosure. The operating method of FIG. 6 may be described with reference to FIGS. 1 to 5.

Referring to FIG. 6, in operation 610, the monitoring device 100 may acquire images. The monitoring device 100 may acquire the images captured by the image acquisition device 103. Here, the images captured by the image acquisition device 103 may be still images or moving images acquired by consecutively capturing the specified imaging areas 221 and 222. In one embodiment, the images captured by the image acquisition device 103 may be specified still images or moving images acquired while the core 230 rotates the specified turns (e.g., 25 turns). In one embodiment, the images captured by the image acquisition device 103 may include the left jelly roll image 310 acquired by the left camera module 211 capturing the first imaging area 221, and the right jelly roll image 320 acquired by the right camera module 212 capturing the second imaging area 222.

In operation 630, the monitoring device 100 may analyze the images. In one embodiment, the monitoring device 100 may analyze the jelly roll images 310 and 320. In one embodiment, the image analysis unit 150 may divide the jelly roll images 310 and 320 into jelly roll images corresponding to the specified turns (e.g., 25 turns). In one embodiment, the image analysis unit 150 may divide the jelly roll images 310 and 320 into jelly roll images for each rotation of the core 230. For example, the image analysis unit 150 may divide the jelly roll images 310 and 320 into 25 sets of jelly roll images corresponding to 25 turns. Here, the set of the jelly roll images may include the left jelly roll image and the right jelly roll image.

In operation 630, the monitoring device 100 may acquire dimension-related information. The monitoring device 100 may inspect the meandering gaps acquired from the left jell roll image and the right jelly roll image.

In one embodiment, the image analysis unit 150 may extract boundaries of the positive electrode 240, the first separator 250, the negative electrode 260, and the second separator 270 from the jelly roll images. In one embodiment, the image analysis unit 150 may acquire specified meandering gaps from the jelly roll images based on the extracted boundaries. In one embodiment, the image analysis unit 150 may acquire the specified meandering gaps at reference positions of the jelly roll images. In one embodiment, the reference positions may be set to be moved by the specified distance in the specified direction as the number of turns increases in each of the plurality of jelly roll images. In one embodiment, the image analysis unit 150 may acquire the meandering gaps based on the reference positions set to be moved by the specified distance in the specified direction as the number of turns increases.

In operation 636, the monitoring device 100 may acquire exterior-related information. The presence or absence of the core mismatch or cutting burr in the jelly roll images of the specified number of turns among the jelly roll images may be analyzed. Here, the jelly roll images of the specified number of turns may include a starting stage image or ending stage image.

In operation 640, the monitoring device 100 may determine the presence or absence of a defect based on the acquired information.

In one embodiment, the monitoring device 100 may determine whether the jelly roll is defective by comparing the meandering gaps acquired by the image analysis unit 150 with the reference meandering gaps preset for each of the meandering gaps. In one embodiment, when at least one of the meandering gaps exceeds the reference meandering gap, the monitoring device 100 may determine that the jelly roll is defective.

In another embodiment, the monitoring device 100 may determine whether the jelly roll is defective based on the difference value between the same type of the meandering gaps. For example, the state determination unit 160 may determine whether the jelly roll is defective by comparing a difference value between the left meandering gap and the right meandering gap with a reference meandering gap for the difference value. In one embodiment, when the difference value exceeds the reference meandering gap, the monitoring device 100 may determine that the jelly roll is defective.

In one embodiment, the state determination unit 160 may determine whether the jelly roll is defective based on the presence or absence of the core mismatch or cutting burr. For example, when the core mismatch or cutting burr occurs, the state determination unit 160 may determine that the jelly roll is defective.

In one embodiment, when at least one of the meandering gap, core mismatch, or cutting burr indicates that the jelly roll is defective, the state determination unit 160 may determine that the jelly roll is defective.

## Claims

1. A monitoring device comprising:
an image acquisition unit configured to acquire a plurality of jelly roll images for specified turns of the jelly roll while the jelly roll is formed while a positive electrode, a negative electrode, and a separator included in a battery cell are wound;
an image analysis unit configured to set reference positions that are moved by a specified distance in a specified direction as the number of turns increases in each of the plurality of jelly roll images and acquire specified meandering gaps at the reference positions; and
a state determination unit configured to determine whether the jelly roll is defective based on the meandering gaps.

2. The monitoring device of claim 1, wherein the plurality of jelly roll images include left images of the jelly roll and right images of the jelly roll, and
the image analysis unit acquires a first meandering gap between the negative electrode and the positive electrode, a second meandering gap between the negative electrode and the separator, and a third meandering gap between the positive electrode and the separator.

3. The monitoring device of claim 2, wherein the state determination unit determines that the jelly roll is defective when a difference between the first meandering gap acquired from the left images and the first meandering gap acquired from the right images exceeds a reference meandering gap.

4. The monitoring device of claim 1, wherein the state determination unit determines whether core mismatch occurs based on the plurality of jelly roll images and determines that the jelly roll is defective when the core mismatch occurs.

5. The monitoring device of claim 1, wherein the number of plurality of jelly roll images is the same to the number of turns for generating the jelly roll.

6. The monitoring device of claim 1, wherein the reference positions are moved in a direction opposite to that of an area in which the jelly roll is wound.

7. The monitoring device of claim 1, wherein the reference positions are set to be moved by the specified distance in the specified direction in a range of the specified number of turns.

8. A method of operating a monitoring device, comprising:
an operation of acquiring a plurality of jelly roll images for specified turns of the jelly roll while the jelly roll is formed while a positive electrode, a negative electrode, and a separator included in a battery cell are wound;
an operation of setting reference positions that are moved by a specified distance in a specified direction as the number of turns increases in each of the plurality of jelly roll images;
an operation of acquiring specified meandering gaps at the reference positions; and
an operation of determining whether the jelly roll is defective based on the meandering gaps.

9. The method of claim 8, wherein the plurality of jelly roll images include left images of the jelly roll and right images of the jelly roll, and
the operation of acquiring the meandering gaps includes an operation of acquiring a first meandering gap between the negative electrode and the positive electrode, a second meandering gap between the negative electrode and the separator, and a third meandering gap between the positive electrode and the separator.

10. The method of claim 9, wherein the operation of determining whether the jelly roll is defective includes determining that the jelly roll is defective when a difference between the first meandering gap acquired from the left images and the first meandering gap acquired from the right images exceeds a reference meandering gap.

11. The method of claim 8, further comprising: an operation of determining whether core mismatch occurs based on the plurality of jelly roll images; and
an operation of determining that the jelly roll is defective when the core mismatch occurs.

12. The method of claim 8, wherein the number of plurality of jelly roll images is the same to the number of turns for generating the jelly roll.

13. The method of claim 8, wherein the reference positions are moved in a direction opposite to that of an area in which the jelly roll is wound.

14. The method of claim 8, wherein the reference positions are set to be moved by the specified distance in the specified direction in a range of the specified number of turns.
